# EUROPÄISCHE PATENTANMELDUNG

(11) **EP 3 106 255 A1**
(43) Veröffentlichungstag der Anmeldung: **21.12.2016**
(21) Anmeldenummer: 15172789.8
(22) Anmeldetag: 18.06.2015
(51) Int. Cl.: B23D 51/12, B23D 59/00, B28D 1/06, B26D 1/553, B26D 1/03, B26D 1/547, B26D 5/00, B26D 1/00

(54) **VORRICHTUNG ZUR DETEKTION DES BRUCHS EINES SCHNEIDELEMENTS**

(71) Anmelder: Haas Food Equipment GmbH, 1210 Wien (AT)
(72) Erfinder: HAAS, Johannes, 1040 Wien (AT); HAAS, Josef, 2100 Leobendorf (AT); JIRASCHEK, Stefan, 2202 Königsbrunn (AT); SCHRAMMEL, Richard, 2154 Altenmarkt (AT); LIEBERMANN, Gerhard, 2203 Manhartsbrunn (AT)
(74) Vertreter: Patentanwälte Puchberger, Berger und Partner

(57) **Zusammenfassung**

Die Erfindung betrifft eine Vorrichtung zur Detektion des Bruchs zumindest eines in einer Führung (1) angeordneten Schneidelements (2), umfassend zumindest einen Sensor (3), wobei zur Halterung des Schneidelements (2) zumindest ein, relativ zur Führung (1) linear verschiebbares und mit dem Schneidelement (2) verbindbares Gleitstück (4) vorgesehen ist, ein Kraftausübeelement (5) zur Erzeugung einer Kraft auf das Gleitstück (4) vorgesehen ist, sodass bei Bruch des Schneidelements (2) das Gleitstück (4) relativ zur Führung (1) verschoben wird, wobei der Sensor (3) zur Detektion einer derartigen Verschiebung des Gleitstücks (4) relativ zur Führung (1) ausgeführt ist. Die Erfindung betrifft weiters eine Anlage mit einer derartigen Detektionsvorrichtung.

## Beschreibung

Die Erfindung betrifft eine Vorrichtung zur Detektion des Bruchs zumindest eines in einer Führung angeordneten Schneidelements, umfassend zumindest einen Sensor.

Bei der industriellen Fertigung von Backwaren in der Lebensmittelindustrie ergibt sich die Notwendigkeit, dass die fertiggebackenen Backwaren beschnitten werden müssen. Gleiches gilt für weiterverarbeitete Backwaren, welche unter anderem beschichtet, gefügt oder anderswertig veredelt sein können. Zum Beschneiden wird das Backgut relativ zu einem Schneidelement, beispielsweise einem Schneiddraht oder einem Schneidband, bewegt, durch welches das Backgut geteilt wird. Es sind Vorrichtungen bekannt, bei denen dieser Schneiddraht oder dieses Schneidband in einer Führung an beiden Enden eingespannt ist und mit einer Spannvorrichtung gespannt wird.

Eine Anforderung derartiger Schneidanlagen besteht darin, dass der Ausschuss an Schnittgut minimiert werden soll. Eine weitere Anforderung besteht darin, dass ein Bruch des Schneiddrahtes oder Schneidbandes möglichst sofort erkannt werden soll, um Beschädigungen des Backguts oder Verzögerungen in der Fertigung zu vermeiden.

Diese und andere Aufgaben werden erfindungsgemäß durch eine Vorrichtung nach Anspruch 1 gelöst.

Erfindungsgemäß ist vorgesehen, dass zur Halterung des Schneidelements zumindest ein, relativ zur Führung linear verschiebbares und mit dem Schneidelement verbindbares Gleitstück vorgesehen ist. Es ist ein Kraftausübeelement vorgesehen, welches eine Kraft auf das Gleitstück ausübt, sodass bei Bruch des Schneidelements das Gleitstück relativ zur Führung durch diese Kraft verschoben wird. Der Sensor ist zur Detektion einer derartigen Verschiebung des Gleitstücks relativ zur Führung ausgeführt, sodass der Sensor einen Bruch des Schneidelements detektiert.

Erfindungsgemäß kann vorgesehen sein, dass das Schneidelement zusätzlich mit einer Spannkraft beaufschlagt wird, welche stärker ist als die Kraft des Kraftausübeelements und dieser entgegenwirkt. Dies ist insbesondere bei der Verwendung eines Schneiddrahtes als Schneidelement vorteilhaft. Wird das Gleitstück demnach zur Spannung des Schneidelements mit der Spannkraft beaufschlagt, so überwindet das Gleitstück die entgegenwirkende Kraft des Kraftausübeelements und begibt sich in eine Spannposition. Zur Endpunkteinstellung kann in der Führung ein Anschlag für das Gleitstück vorgesehen sein. Bei Bruch des Schneidelements entfällt diese Spannkraft, und das Gleitstück wird durch die Kraft des Kraftausübeelements in eine neue Lage verschoben, welche eindeutig den Bruch des Schneidelements kennzeichnet und digital ausgewertet werden kann.

Erfindungsgemäß kann vorgesehen sein, dass das Kraftausübeelement an der Führung angeordnet oder Teil der Führung ist. Erfindungsgemäß kann auch vorgesehen sein, dass das Kraftausübeelement am Gleitstück angeordnet oder Teil des Gleitstücks ist.

Erfindungsgemäß kann vorgesehen sein, dass am Gleitstück ein mit dem Sensor zusammenwirkendes signalauslösendes Element angeordnet ist.

Erfindungsgemäß kann vorgesehen sein, dass der Sensor als Laserschranke, als Lichtschranke, Induktionssensor, Kapazitätssensor, pneumatischer Sensor, hydraulischer Sensor oder Magnetsensor ausgeführt ist.

Erfindungsgemäß kann vorgesehen sein, dass der Sensor als Laserschranke mit einem Sender und einem Empfänger, und das signalauslösende Element als Vorsprung ausgeführt ist, wobei die Laserschranke zur Detektion der Position des Vorsprungs relativ zur Führung eingerichtet ist.

Erfindungsgemäß kann vorgesehen sein, dass das Kraftausübeelement als Spiralfeder, insbesondere Spiraldruckfeder, Tellerfeder, pneumatisches Element, hydraulisches Element oder magnetisches Element ausgeführt ist. Insbesondere kann das Kraftausübeelement als Spiraldruckfeder ausgeführt sein, die einerseits an der Führung, und andererseits am Gleitstück angreift.

Erfindungsgemäß kann vorgesehen sein, dass das Gleitstück in einer Ausnehmung der Halterung angeordnet ist, wobei ein Anschlag zur Definition eines Endpunkts des Gleitstücks vorgesehen ist.

Erfindungsgemäß kann vorgesehen sein, dass das Schneidelement als Schneiddraht oder Schneidband ausgeführt ist. Erfindungsgemäß kann insbesondere vorgesehen sein, dass dieses Schneidelement mit einer Spannkraft beaufschlagbar ist, die stärker ist als die Kraft des Kraftausübeelements.

Erfindungsgemäß kann vorgesehen sein, dass am Gleitstück eine vorzugsweise spannbare Fixiervorrichtung zur Fixierung des Schneidelements vorgesehen ist.

Die Erfindung umfasst weiters eine Anlage zum Teilen von Backwaren mit zumindest einem Schneidelement und zumindest einer erfindungsgemäßen Detektionsvorrichtung.

Erfindungsgemäß kann vorgesehen sein, dass an einem oder an beiden Enden zumindest eines Schneidelements eine erfindungsgemäße Detektionsvorrichtung vorgesehen ist. So kann ein Ende des Schneidelements an der Führung fixiert sein, und ein anderes Ende an dem Gleitstück einer erfindungsgemäßen Detektionsvorrichtung befestigt sein.

Erfindungsgemäß kann vorgesehen sein, dass zumindest zwei Schneidelemente in der Führung parallel zueinander angeordnet sind. Erfindungsgemäß kann insbesondere vorgesehen sein, dass mehrere erfindungsgemäße Detektionsvorrichtungen in der als Rahmen dienenden Führung nebeneinander angeordnet sind.

Erfindungsgemäß kann vorgesehen sein, dass für zumindest zwei erfindungsgemäße Detektionsvorrichtungen derselbe Sensor vorgesehen ist. Erfindungsgemäß kann insbesondere vorgesehen sein, dass mehrere erfindungsgemäße Detektionsvorrichtungen in der als Rahmen dienenden Führung nebeneinander angeordnet sind und durch einen einzigen Sensor abgefragt werden.

Erfindungsgemäß kann vorgesehen sein, dass eine Anordnung zur einfachen oder mehrfachen winkeligen Umlenkung des Schneidelements vorgesehen ist, wobei vorzugsweise eine Umlenkung um einen Winkel von 180° vorgesehen ist.

Bevorzugt ist die erfindungsgemäße Vorrichtung ein Teil einer Schneidstation zum Zerschneiden oder Beschneiden von Waffelblöcken, insbesondere in einer Anlage zur industriellen Herstellung von Waffelprodukten aus Waffelblättern mit knusprig-spröder Konsistenz, die in einem Backzangenofen mit verriegelbaren Backzangen unter Druck ausgebacken werden.

Weitere erfindungsgemäße Merkmale ergeben sich aus den Patentansprüchen, der Beschreibung der erfindungsgemäßen Ausführungsformen und den Figuren.

Im Folgenden werden Ausführungsformen der erfindungsgemäßen Vorrichtung an Hand von Figuren näher beschrieben.

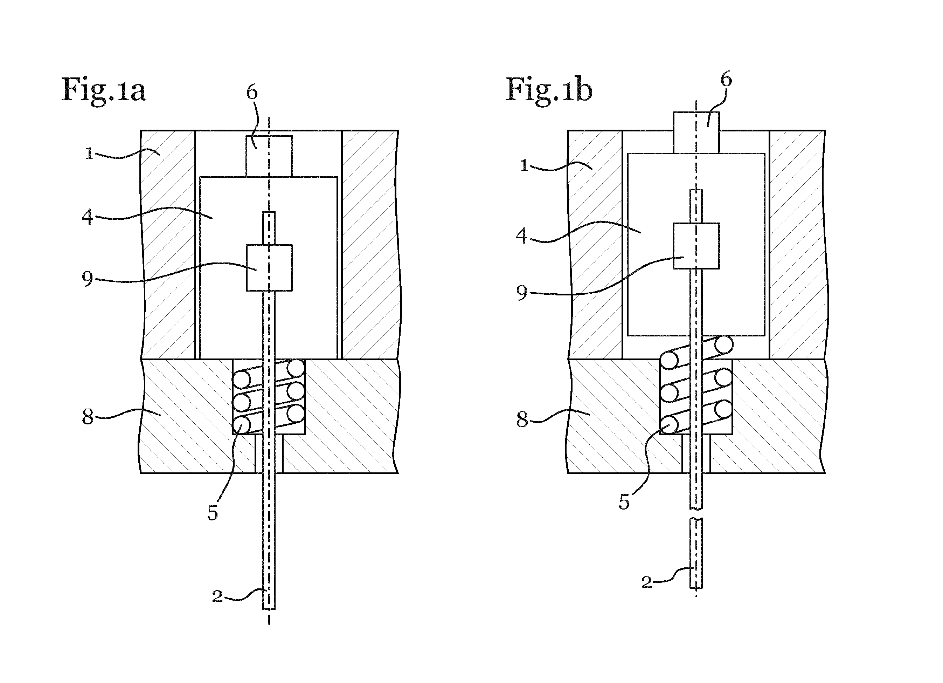

Fig. 1a zeigt eine Ausführungsform einer erfindungsgemäßen Vorrichtung mit einem intakten Schneidelement 2. Das Schneidelement 2 ist mit einer Fixiervorrichtung 9 auf einem linear verschiebbaren Gleitstück 4 fixiert und in einer Führung 1 eingespannt. Das Gleitstück 4 ist in einer Ausnehmung der Führung 1 derart angeordnet, dass es lediglich in Richtung des Schneidelements 2 beweglich ist, also nur einen Freiheitsgrad aufweist. Beim Befestigen des Schneidelements 2 wird vorzugsweise eine Spannkraft auf das Gleitstück 4 ausgeübt, sodass das Gleitstück 4 gegen einen Anschlag 8 in der Ausnehmung der Führung 1 gedrückt wird.

In der Führung 1 ist ein Kraftausübeelement 5 in Form einer Spiraldruckfeder angeordnet, welches das Gleitstück 4 vom Anschlag 8 wegdrückt. Die Spannkraft des intakten Schneidelements 2 ist jedoch höher als die Kraft des Kraftausübeelements 5, sodass das Gleitstück 4 bei intaktem Schneidelement 2 gegen den Anschlag 8 gedrückt wird. Am Gleitstück 4 ist ein signalauslösendes Element 6 in Form eines Vorsprungs angeordnet, das jedoch im intakten, also gespannten Zustand des Schneidelements 2 nicht über die Oberfläche der Führung 1 hinausragt.

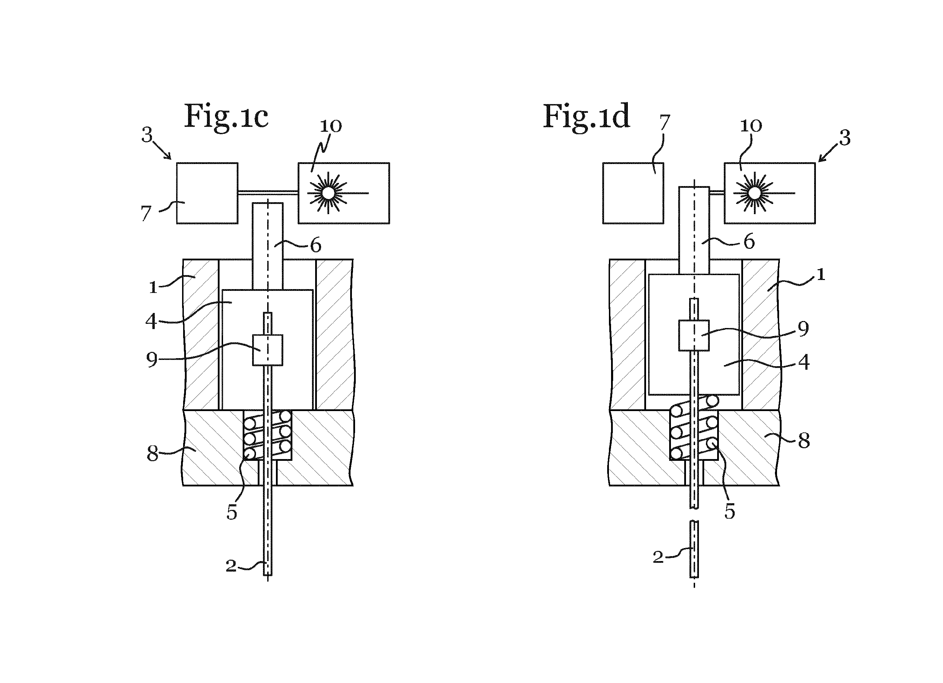

Fig. 1b zeigt die erfindungsgemäße Vorrichtung aus Fig. 1 a nach Bruch des Schneidelements 2. Durch den Bruch des Schneidelements 2 entfällt die Spannkraft auf das Gleitstück 4 und die Kraft des Kraftausübeelements 5 verschiebt das Gleitstück 4 nach oben. Das signalauslösende Element 6 wird mit dem Gleitstück 4 nach oben gedrückt und überragt nun die Oberfläche der Führung 1.

Fig. 1c und 1 d zeigen die erfindungsgemäße Vorrichtung aus Fig. 1 a und Fig. 1b in einer weiteren Darstellung zusammen mit einem Sensor 3. Der Sensor 3 ist als Lichtschranke, optional als Laserschranke ausgeführt und umfasst einen Sender 10 und einen Empfänger 7. Durch die Verschiebung des Gleitstücks 4 bei einem Bruch des Schneidelements 2 tritt das signalauslösende Element in den Lichtstrahl zwischen Sender 10 und Empfänger 7, sodass der Sensor 3 den Bruch detektiert.

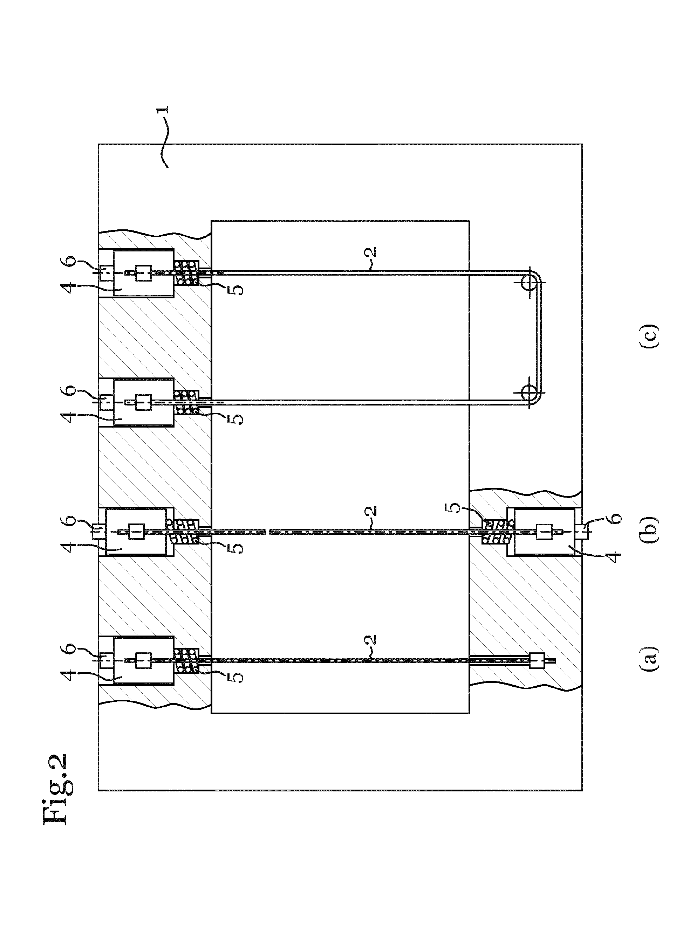

Fig. 2 zeigt eine erfindungsgemäße Anlage mit mehreren erfindungsgemäßen Detektionsvorrichtungen, die nebeneinander in einem Rahmen angeordnet sind, welcher die erfindungsgemäße Führung 1 bildet. Es sind drei nebeneinanderliegende Detektionsvorrichtungen (a), (b) und (c) abgebildet.

Fall (a) zeigt die Basislösung, bei der ein Ende des Schneidelements 2 an der Führung 1 fixiert ist, und das andere Ende mit der erfindungsgemäßen Detektionsvorrichtung ausgestattet ist. In diesem Fall reicht es, wenn der obere Bereich der Führung 1 mit einem Sensor ausgestattet wird, um eine Verschiebung des einzigen Gleitstücks zu detektieren.

Fall (b) zeigt eine Ausführung, bei der beide Enden des Schneidelements 2 mit einer erfindungsgemäßen Detektionsvorrichtung ausgestattet sind. Dies erlaubt eine Redundanz und höhere Prozesssicherheit bei der Detektion, da nicht ein Sensor, sondern zwei Sensoren einen Bruch des Schneidelements detektieren. Sensoren sind in diesem Fall am oberen und unteren Bereich der Führung 1 angeordnet. In der Abbildung ist der Bruchfall dargestellt.

Fall (c) zeigt eine Ausführung, bei der das Schneidelement 2 mehrfach umgelenkt wird, um zu erreichen, dass an beiden Enden des Schneidelements 2 eine erfindungsgemäße Detektionsvorrichtung angebracht werden kann, und trotzdem nur ein Sensor vorgesehen werden muss. Im Bruchfall reagieren beide nebeneinanderliegenden Detektionsvorrichtungen, und es ist eine einfache Auswertung mit nur einem Lichtstrahl eines einzigen Sensors möglich.

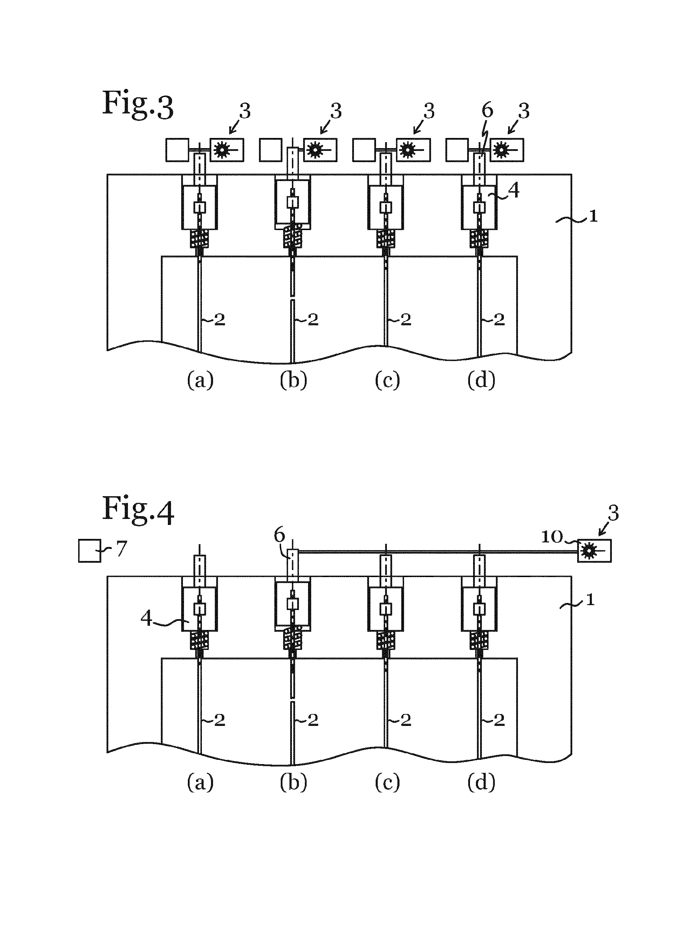

Fig. 3 zeigt eine erfindungsgemäße Anlage mit mehreren nebeneinander in einem als Führung 1 wirkenden Rahmen angeordneten Schneidelementen 2. In diesem Ausführungsbeispiel ist für jedes Gleitstück 4 ein separater Sensor 3 vorgesehen. Dies hat den Vorteil, dass bei Detektion eines Bruchs sofort festgestellt werden kann, welches der Schneidelemente 2 gebrochen ist.

Fig. 4 zeigt eine erfindungsgemäße Anlage mit mehreren nebeneinander in einem als Führung 1 wirkenden Rahmen angeordneten Schneidelementen 2. In diesem Ausführungsbeispiel ist für alle Gleitstücke 4 derselbe Sensor 3 vorgesehen. Dies wird ermöglicht, indem die Gleitstücke 4 und deren als signalauslösende Elemente 6 dienende Vorsprünge genau auf die Position des Sensors 3 in Form einer Lichtschranke mit Sensor 10 und Empfänger 7 ausgerichtet sind. Durchbricht eines der signalauslösenden Elemente 6 den Lichtstrahl, so erfolgt eine Detektion des Drahtbruchs. Dies hat den Vorteil, dass nur eine Lichtschranke vorgesehen werden muss.

Die Erfindung beschränkt sich nicht auf die dargestellten Ausführungsbeispiele, sondern umfasst sämtliche Vorrichtungen und Anlagen im Rahmen der nachfolgenden Patentansprüche.

### Bezugszeichenliste

- 1: Führung
- 2: Schneidelement
- 3: Sensor
- 4: Gleitstück
- 5: Kraftausübeelement
- 6: Signalauslösendes Element
- 7: Empfänger
- 8: Anschlag
- 9: Fixiervorrichtung
- 10: Sender

## Patentansprüche

1. Vorrichtung zur Detektion des Bruchs zumindest eines in einer Führung (1) angeordneten Schneidelements (2), umfassend zumindest einen Sensor (3), **dadurch gekennzeichnet, dass**
a. zur Halterung des Schneidelements (2) zumindest ein, relativ zur Führung (1) linear verschiebbares und mit dem Schneidelement (2) verbindbares Gleitstück (4) vorgesehen ist,
b. ein Kraftausübeelement (5) zur Erzeugung einer Kraft auf das Gleitstück (4) vorgesehen ist, sodass bei Bruch des Schneidelements (2) das Gleitstück (4) relativ zur Führung (1) verschoben wird,
c. wobei der Sensor (3) zur Detektion einer derartigen Verschiebung des Gleitstücks (4) relativ zur Führung (1) ausgeführt ist.

2. Vorrichtung nach Anspruch 1, **dadurch gekennzeichnet, dass** das Kraftausübeelement (5) an der Führung (1) angeordnet oder Teil der Führung (1) ist.

3. Vorrichtung nach Anspruch 1, **dadurch gekennzeichnet, dass** das Kraftausübeelement (5) am Gleitstück (4) angeordnet oder Teil des Gleitstücks (4) ist.

4. Vorrichtung nach einem der vorhergehenden Ansprüche, **dadurch gekennzeichnet, dass** am Gleitstück (4) ein mit dem Sensor (3) zusammenwirkendes signalauslösendes Element (6) angeordnet ist, wobei der Sensor (3) vorzugsweise als Laserschranke (7), als Lichtschranke, Induktionssensor, Kapazitätssensor, pneumatischer Sensor, hydraulischer Sensor oder Magnetsensor ausgeführt ist.

5. Vorrichtung nach Anspruch 4, **dadurch gekennzeichnet, dass** der Sensor (3) als Laserschranke (7) mit einem Sender (10) und einem Empfänger (7), und das signalauslösende Element (6) als Vorsprung ausgeführt ist, wobei die Laserschranke (7) zur Detektion der Position des Vorsprungs relativ zur Führung (1) eingerichtet ist.

6. Vorrichtung nach einem der vorhergehenden Ansprüche, **dadurch gekennzeichnet, dass** das Kraftausübeelement (5) als Spiralfeder, insbesondere Spiraldruckfeder, Tellerfeder, pneumatisches Element, hydraulisches Element oder magnetisches Element ausgeführt ist.

7. Vorrichtung nach einem der vorhergehenden Ansprüche, **dadurch gekennzeichnet, dass** das Gleitstück (4) in einer Ausnehmung der Halterung (1) angeordnet ist, wobei ein Anschlag (8) zur Definition eines Endpunkts des Gleitstücks (4) vorgesehen ist.

8. Vorrichtung nach einem der vorhergehenden Ansprüche, **dadurch gekennzeichnet, dass** das Schneidelement (2) als Schneiddraht oder Schneidband ausgeführt ist.

9. Vorrichtung nach einem der vorhergehenden Ansprüche, **dadurch gekennzeichnet, dass** am Gleitstück (4) eine vorzugsweise spannbare Fixiervorrichtung (9) zur Fixierung des Schneidelements (2) vorgesehen ist.

10. Vorrichtung nach einem der vorhergehenden Ansprüche, **dadurch gekennzeichnet, dass** bei intaktem Schneidelement (2) die vom Kraftausübeelement (5) auf das Gleitstück (4) wirkende Kraft kleiner ist als die vom gespannten Schneidelement (2) auf das Gleitstück (4) ausgeübte Spannkraft, sodass das Gleitstück bei intaktem Schneidelement (2) an den Anschlag (8) gedrückt ist.

11. Anlage zum Teilen von Backwaren mit zumindest einem Schneidelement (2) und zumindest einer Detektionsvorrichtung nach einem der Ansprüche 1 bis 10.

12. Anlage nach Anspruch 11, **dadurch gekennzeichnet, dass** an einem oder an beiden Enden zumindest eines Schneidelements (2) eine Detektionsvorrichtung nach einem der Ansprüche 1 bis 10 vorgesehen ist.

13. Anlage nach einem der Ansprüche 11 oder 12, **dadurch gekennzeichnet, dass** zumindest zwei Schneidelemente (2) in der Führung (1) parallel zueinander angeordnet sind.

14. Anlage nach einem der Ansprüche 11 bis 13, **dadurch gekennzeichnet, dass** für zumindest zwei Detektionsvorrichtungen derselbe Sensor (3) vorgesehen ist.

15. Anlage nach einem der Ansprüche 11 bis 14, **dadurch gekennzeichnet, dass** eine Anordnung zur einfachen oder mehrfachen winkeligen Umlenkung des Schneidelements (2) vorgesehen ist, wobei vorzugsweise eine Umlenkung um einen Winkel von 180° vorgesehen ist.
